Europäisches Patentamt

European Patent Office

Office européen des brevets

(19)

(11)  EP 0 823 447 A1

(12)  EUROPÄISCHE PATENTANMELDUNG

(43) Veröffentlichungstag:
     11.02.1998  Patentblatt 1998/07

(51) Int. Cl.⁶: **C08G 18/62**, C08G 18/65,
     C08G 18/69

(21) Anmeldenummer: 97112937.4

(22) Anmeldetag: 28.07.1997

(84) Benannte Vertragsstaaten:
     AT BE CH DE DK ES FI FR GB GR IE IT LI LU MC
     NL PT SE

(30) Priorität: 09.08.1996 DE 19632125

(71) Anmelder: BAYER AG
     51368 Leverkusen (DE)

(72) Erfinder:
     • Kaufhold, Wolfgang, Dr.
       51061 Köln (DE)
     • Dujardin, Ralf, Dr.
       47877 Willich-Anrath (DE)
     • Pudleiner, Heinz, Dr.
       47800 Krefeld (DE)

(54)  **Thermoplastische Polyurethanelastomere**

(57)  Die Erfindung betrifft thermoplastisch verarbeitbare Polyurethanelastomere, zu deren Herstellung als Polyol-Komponente spezielle hydrierte Polybutadiene mit endständigen Hydroxylgruppen verwendet werden. Die Polyole sind mit niedermolekularen Diolen und Isocyanaten soweit verträglich, daß bei der Polyurethanherstellung keine Emulgatoren oder Lösungsvermittler zugesetzt werden müssen.

EP 0 823 447 A1

**Beschreibung**

Die Erfindung betrifft thermoplastisch verarbeitbare Polyurethanelastomere, zu deren Herstellung als Polyol-Komponente spezielle hydrierte Polybutadiene mit endständigen Hydroxylgruppen verwendet werden, die mit niedermolekularen Diolen und Isocyanaten hinreichend verträglich sind.

Thermoplastisch verarbeitbare Polyurethanelastomere (TPU) werden aus linearen Polyolen, organischen Diisocyanaten und kurzkettigen Diolen (Kettenverlängerern) aufgebaut. Als Polyol-Komponente werden meist Polyester- oder Polyether-Diole verwendet. Da deren Ester- bzw. Ethergruppen jedoch nicht beständig gegen Hydrolyse sind, hat man verschiedentlich hydroxyfunktionalisierte Kohlenwasserstoffe als Polyole eingesetzt. Die US-PS 3,629,172 offenbart die Herstellung hydrierter Polybutadiene und Butadiencopolymere mit endständigen Hydroxylgruppen und ihre Verwendung zur Herstellung von Polyurethanen, aus EP-A 624 612 geht die Herstellung von thermoplastischen Polyurethanen mit hydroxylterminierten hydrierten Polybutadienen und Mischungen verschiedener solcher Polyole hervor. Ein Nachteil dieser Polybutadien-Diole ist deren Unverträglichkeit mit niedermolekularen Diolen und Isocyanaten. Diese resultiert in einer Entmischung der Reaktionskomponenten bei der Polyurethanherstellung, wodurch inhomogene Produkte mit unbefriedigenden Eigenschaften erhalten werden. Um dies zu vermeiden, müssen Lösungsmittel, Emulgatoren oder Verträglichkeitsvermittler zugesetzt werden (US-PS 5,057,573, EP-A 676 432, US-PS 4,603,188).

Es wurde nun gefunden, daß sich die beschriebenen Nachteile vermeiden lassen, wenn spezielle hydroxylterminierte hydrierte Polybutadiene als Polyol-Komponente zur Polyurethanherstellung eingesetzt werden. Diese Polyole sind so gut mit niedermolekularen Diolen und Isocyanaten verträglich, daß die Polyurethanherstellung im Masseverfahren erfolgen kann, ohne Zusatz von Emulgatoren oder Verträglichkeitsvermittlern.

Gegenstand der Erfindung sind somit thermoplastisch verarbeitbare Polyurethane, hergestellt durch Umsetzung der polyurethanbildenden Komponenten

A) organisches Diisocyanat,

B) hydroxylterminiertes hydriertes Polybutadien der Formel

$$HO-CH_2-CH_2-[-\{CH_2-CH_2\}_m-\{CH_2-CH(CH_2-CH_3)\}_n-]-CH_2-CH_2-OH,$$

wobei das Verhältnis m/n 3:1 bis 1,33:1 betragen kann, mit einem mittleren Molekulargewicht $\overline{M}_n$ von 2000 bis 8000 g/mol, einer Funktionalität von 1,9 bis 2,0 und einem Polymolekularitätsindex $\overline{M}_w/\overline{M}_n$ von 0,8 bis 1,4,

C) Kettenverlängerer mit einem Molekulargewicht von 60 bis 500,

wobei das Molverhältnis der NCO-Gruppen in A) zu den gegenüber Isocyanat reaktiven Gruppen in B) u. C) 0,9 bis 1,2 beträgt.

Als organische Diisocyanate A) kommen beispielsweise aliphatische, cycloaliphatische, araliphatische, heterocyclische und aromatische Diisocyanate in Betracht, wie sie in Justus Liebigs Annalen der Chemie, 562, S.75-136 beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4''-triisocyanat oder Polyphenyl-polymethylen-polyisocyanaten.

Als Polyol-Komponente B) werden hydroxylterminierte hydrierte Polybutadiene der Formel

$$HO-CH_2-CH_2-[-\{CH_2-CH_2\}_m-\{CH_2-CH(CH_2-CH_3)\}_n-]-CH_2-CH_2-OH$$

eingesetzt, bei denen das Verhältnis m/n 3:1 bis 1,33:1 betragen kann. Die erfindungsgemäßen Polyole weisen ein mittleres Molekulargewicht $\overline{M}_n$ von 500 bis 5000 g/mol, bevorzugt 3000 bis 4000 g/mol und eine Funktionalität von 1,9 bis 2,0, bevorzugt 1,95 bis 2,0 auf. Die erfindungsgemäßen Polyole zeigen eine enge Molekulargewichtsverteilung, der Polymolekularitätsindex $\overline{M}_w/\overline{M}_n$ beträgt 0,8 bis 1,4, bevorzugt 1,0 bis 1,2.

Als Kettenverlängerungsmittel C) werden Diole, Diamine oder Aminoalkohole mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol, Neopentylglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, ethoxylierte Bisphenole, (cyclo)aliphatische Diamine, wie z.B. Isophorondiamin, Ethylendiamin, 1,2-Propylendiamin, 1,3-Propylendiamin, N-Methyl-1,3-diaminopropan, N,N'-Dimethylethylendiamin, 2,4-Diamino-1-methylcyclohexan, 2,6-Diamino-1-methylcyclohexan und aromatische Diamine, wie z.B. 2,4-Diaminotoluol (2,4-TDA) und 2,6-Diaminotoluol (2,6-TDA), 2,4-Diamino-3,5-diethyltoluol und 2,6-Diamino-3,5-diethyltoluol und primäre mono-, di-, tri- oder tetraalkylsubstituierte 4,4'-Diaminodiphenylmethane oder Aminoalkohole wie Ethanolamin, 1-Aminopropanol, 2-Aminopropanol. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Die molaren Verhältnisse der Aufbaukomponenten können über einen breiten Bereich variiert werden, woduch sich die Eigenschaften des Produkts einstellen lassen. Bewährt haben sich molare Verhältnisse von Polyolen zu Kettenverlängerern von 1:1 bis 1:12. Zur Herstellung der TPU können die Aufbaukomponenten, gegebenenfalls in Gegenwart von Katalysatoren, Hilfsmitteln und Zusatzstoffen, in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen.

Neben den TPU-Komponenten und den Katalysatoren können auch andere Hilfsmittel und Zusatzstoffe zugesetzt werden. Genannt seien beispielsweise Gleitmittel wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Der Aufbau der thermoplastisch verarbeitbaren Polyurethanelastomeren kann entweder schrittweise (Prepolymerverfahren) oder durch die gleichzeitige Reaktion aller Komponenten in einer Stufe erfolgen (one-shot-Verfahren). Bevorzugt wird das Prepolymerverfahren eingesetzt. Dabei wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Da die erfindungsgemäßen Polyole mit den übrigen Komponenten hinreichend verträglich sind, kann die Herstellung in Substanz erfolgen, ohne Zusatz von Lösungsmitteln, Emulgatoren oder Verträglichkeitsvermittlern.

## Beispiele

Als Polyolkomponente wurde in den erfindungsgemäßen Beispielen ein hydroxylterminiertes hydriertes Polybutadien mit einem mittleren Molekulargewicht von 3400 g/mol, einer Funktionalität von 1,9-2,0 und einem Polymolekularitätsindex $\overline{M}_w/\overline{M}_n$ von 1,1 verwendet, das unter dem Handelsnamen Kraton® Liquid HPVM 2203 von der Shell AG vertrieben wird. In den Vergleichsbeispielen wurden als Polyolkomponente Mischungen aus zwei verschiedenen hydroxylterminierten hydrierten Polybutadienen (Polytail® H und Polytail® HA der Ken Seika Corp., Little Silver, N.J.) eingesetzt. Das verwendete Polytail® H wies ein mittleres Molekulargewicht von 2300 g/mol, eine Funktionalität von 2,3 und einen Polymolekularitätsindex $\overline{M}_w/\overline{M}_n$ von 2,3 auf, das Polytail® HA ein mittleres Molekulargewicht von 2200, eine Funktionalität von 1,8 und einen Polymolekularitätsindex $\overline{M}_w/\overline{M}_n$ von 1,8. Für eine Mischung im Verhältnis 4:6 ergibt sich eine gemittelte Funktionalität von 2,0.

## Beispiele 1 bis 9

### TPU-Herstellung

In einem Reaktionsgefäß wurde gemäß Tabelle 1 das jeweils verwendete Polyol zunächst mit der Gesamtmenge an Diisocyanat bei 120°C bis zum vollständigen Umsatz des Polyols reagiert. Die theoretische NCO-Zahl wurde bei den Versuchen mit MDI innerhalb von 20-30 Minuten, bei den Versuchen mit $H_{12}$MDI (Desmodur® W, Bayer AG) innerhalb von 2-3 Stunden erreicht. Danach wurde unter Rühren der Kettenverlängerer zugegeben. Bei den Versuchen mit $H_{12}$MDI wurden zusätzlich 100 ppm, bezogen auf die Gesamtmenge an TPU, Dibutylzinndilaurat als Katalysator zugesetzt. Nach 30-60 Sekunden wurde die Reaktionsmischung auf ein beschichtetes Blech gegossen und 1 Stunde lang bei 100°C getempert.

### Mechanische Prüfung

Aus dem Material wurden rechteckige Prüfkörper (50 mm x 10 mm x 1mm) hergestellt, an denen gemäß DIN 53504 Zugfestigkeit, Bruchdehnung und Spannung bei 100% und 300% Dehnung (F100 bzw. F300) gemessen wurden. Die Härte Shore A wurde gemäß DIN 53505 bestimmt. Die Glasübergangstemperatur $T_G$ und die Erweichungstemperatur $T_{erw}$ (E' = 2 MPa) wurden aus Elastizitätsmodulmessungen gemäß DIN 53440 ermittelt, wobei die Meßdaten mit einer Frequenz von 1 Hz und einer Heizrate von 2°C/min erfaßt wurden. Die Ergebnisse sind in Tab. 2 zusammengefaßt.

**Tabelle 1**

| Beispiel | Diisocyanat | Mole Diisocyanat | Polyol | Mole Polyol | Mole Butandiol | Katalysator | Anteil Weichsegment |
|---|---|---|---|---|---|---|---|
| 1 | MDI | 0,212 | Kraton® HPVM 2203 | 0,069 | 0,143 | - | 78 % |
| 2 | MDI | 0,281 | Kraton® HPVM 2203 | 0,062 | 0,219 | - | 70 % |
| 3 | Desmodur® W | 0,205 | Kraton® HPVM 2203 | 0,069 | 0,136 | 100 ppm | 78 % |
| 4 | Desmodur® W | 0,271 | Kraton® HPVM 2203 | 0,062 | 0,209 | 100 ppm | 70 % |
| 5 | Desmodur® W | 0,354 | Kraton® HPVM 2203 | 0,053 | 0,301 | 100 ppm | 60 % |
| 6[*] | MDI | 0,222 | Polytail® H/HA (4:6) | 0,105 | 0,117 | - | 78 % |
| 7[*] | MDI | 0,290 | Polytail® H/HA (4:6) | 0,094 | 0,196 | - | 70 % |
| 8[*] | Desmodur® W | 0,215 | Polytail® H/HA (4:6) | 0,105 | 0,110 | 100 ppm | 78 % |
| 9[*] | Desmodur® W | 0,280 | Polytail® H/HA (4:6) | 0,094 | 0,186 | 100 ppm | 70 % |

[*] nicht erfindungsgemäße Vergleichsbeispiele

EP 0 823 447 A1

Tabelle 2

| Beispiel | 1 | 4 | 5 | 6* | 9* |
|---|---|---|---|---|---|
| Diisocyanat | MDI | Desmodur® W | Desmodur® W | MDI | Desmodur® W |
| Polyol | Kraton® HPVM 2203 | Kraton® HPVM 2203 | Kraton® HPVM 2203 | Polytail® H/HA (4:6) | Polytail® H/HA (4:6) |
| Anteil WS [%] | 78 | 70 | 60 | 78 | 70 |
| Zugfestigkeit [MPa] | 14,7 | 23,1 | 23,5 | 6,5 | 15,4 |
| F100 [MPa] | 3,7 | 5,3 | 11,2 | 4,1 | 5,3 |
| F300 [MPa] | 7,9 | 11,6 | 20,4 | - | 10,4 |
| Bruchdehnung [%] | 625 | 545 | 360 | 267 | 414 |
| $T_G$ [°C] | -52 | -51 | -50 | -32 | -28 |
| $T_{erw}$ [°C] | 156 | 139 | 158 | 121 | 118 |
| Härte [Shore A] | 67 | 72 | 86 | - | - |

* nicht erfindungsgemäße Vergleichsbeispiele

**Patentansprüche**

1. Thermoplastisch verarbeitbares Polyurethan, hergestellt durch Umsetzung der polyurethanbildenden Komponenten

    A) organisches Diisocyanat,

    B) hydroxylterminiertes hydriertes Polybutadien der Formel

    $$HO\text{-}CH_2\text{-}CH_2\text{-}[\text{-}\{CH_2\text{-}CH_2\}_m\text{-}\{CH_2\text{-}CH(CH_2\text{-}CH_3)\}_n\text{-}]\text{-}CH_2\text{-}CH_2\text{-}OH,$$

    wobei das Verhältnis m/n 3:1 bis 1,33:1 betragen kann, mit einem mittleren Molekulargewicht $\overline{M}_n$ von 2000 bis 8000 g/mol, einer Funktionalität von 1,9 bis 2,0 und einem Polymolekularitätsindex $\overline{M}_w/\overline{M}_n$ von 0,8 bis 1,4,

    C) Kettenverlängerer mit einem Molekulargewicht von 60 bis 500,

    wobei das Molverhältnis der NCO-Gruppen in A) zu den gegenüber Isocyanat reaktiven Gruppen in B) u. C) 0,9 bis 1,2 beträgt.

# EP 0 823 447 A1

**Europäisches Patentamt**

## EUROPÄISCHER RECHERCHENBERICHT

Nummer der Anmeldung

EP 97 11 2937

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | WO 97 00901 A (SHELL INT RESEARCH) 9.Januar 1997 <br> * Seite 2, Zeile 23 - Seite 3, Zeile 2 * <br> * Beispiele 1-4 * <br> * Ansprüche 1,8 * <br> --- | 1 | C08G18/62 <br> C08G18/65 <br> C08G18/69 |
| A | EP 0 709 416 A (SHELL INT RESEARCH) 1.Mai 1996 <br> * Seite 3, Zeile 27 - Seite 3, Zeile 40 * <br> * Tabelle 1 * <br> --- | 1 | |
| D,A | EP 0 624 612 A (BECTON DICKINSON CO) 17.November 1994 <br> * Seite 4, Zeile 4 - Seite 4, Zeile 30 * <br> * Ansprüche 1,4 * <br> --- | 1 | |
| D,A | US 3 629 172 A (JONES FABER B) 21.Dezember 1971 <br> * Spalte 2, Zeile 36 - Spalte 3, Zeile 31 * <br> * Anspruch 3 * <br> ----- | 1 | |

**RECHERCHIERTE SACHGEBIETE (Int.Cl.6)**

C08G

Der vorliegende Recherchenbericht wurde für alle Patentansprüche erstellt

| Recherchenort | Abschlußdatum der Recherche | Prüfer |
|---|---|---|
| MÜNCHEN | 11.November 1997 | Heidenhain, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

7